# EUROPÄISCHE PATENTSCHRIFT

(11) **EP 3 245 102 B1**
(45) Veröffentlichungstag und Bekanntmachung des Hinweises auf die Patenterteilung: **03.10.2018**
(21) Anmeldenummer: 15816367.5
(22) Anmeldetag: 19.12.2015
(51) Int. Cl.: B60Q 3/64, B60Q 3/78

(54) **ZIERTEIL FÜR EIN KRAFTFAHRZEUG**
DECORATIVE TRIM FOR A MOTOR VEHICLE
ÉLÉMENT DÉCORATIF POUR VÉHICULE AUTOMOBILE

(30) Priorität: 30.12.2014 DE 102014019607
(43) Veröffentlichungstag der Anmeldung: 22.11.2017
(73) Patentinhaber: Audi AG, 85045 Ingolstadt (DE)
(72) Erfinder: KOWATZKI, Stefan, 85134 Stammham (DE); KOPES, Herbert, 85051 Ingolstadt (DE)
(86) Internationale Anmeldenummer: PCT/EP2015/002572
(87) Internationale Veröffentlichungsnummer: WO 2016/107675

(56) Entgegenhaltungen:
- EP-A2- 2 053 484
- DE-B3-102006 011 641
- FR-A1- 2 972 402

## Beschreibung

Die Erfindung betrifft ein Zierteil für ein Kraftfahrzeug mit einem ersten Teil, welches aus einem ersten, galvanisierbaren Werkstoff gebildet ist, und einer Galvanikschicht, welche eine Oberfläche des ersten Teils wenigstens teilweise bedeckt, und einem zweiten, an das erste Teil angrenzenden Teil, welches aus einem zweiten, ungalvanisierbaren und lichtdurchlässigen Werkstoff gebildet ist, wobei eine einer Zierteilfront des Zierteils zugehörige Oberfläche des zweiten Teils rückseitig beleuchtbar ist.

Aus der WO 2013/135387 A1 ist eine Beleuchtungseinrichtung, insbesondere eine Konturbeleuchtung, für ein Kraftfahrzeug bekannt, wobei die Beleuchtungseinrichtung ein Gehäuse umfasst. Das Gehäuse weist dabei außenseitig in einer Montagestellung einen lichtdurchlässigen und beleuchtbaren Bereich auf. Weiterhin weist das Gehäuse außenseitig in der Montagestellung einen weiteren Bereich auf, welcher von einer lichtundurchlässigen Schicht bedeckt ist. Die lichtundurchlässige Schicht kann beispielsweise eine Galvanikschicht sein, welche beispielsweise durch Maskieren des beleuchtbaren Bereichs an dieser Stelle nicht aufgebracht ist. Alternativ kann das Gehäuse auch in einem sogenannten Zweikomponenten-Spritzgussverfahren hergestellt sein. Dann ist es möglich, in dem beleuchtbaren Bereich ungalvanisierbaren Kunststoff vorzusehen und in dem zu beschichtenden Bereich galvanisierbaren Kunststoff. Nachteilig ist hierbei jedoch, dass es so zu einer unscharfen Kante der Galvanikschicht in dem Bereich kommen kann, in welchem der zu beschichtende Bereich an den beleuchtbaren Bereich angrenzt. Das heißt, dass fertigungsbedingt keine scharfe Grenze zwischen dem beleuchtbaren Bereich und der Galvanikschicht auf dem lichtundurchlässigen Bereich des Gehäuses gezogen werden kann.

Die EP 2 177 843 A1 betrifft eine verschwenkbar gelagerte Lamelle in einer Lamellenanordnung in einem Gehäuse einer Luftdüse. Diese Lamelle kann in einem Zweikomponenten-Spritzgussverfahren gefertigt sein, sodass sie einen lichtdurchlässigen und einen lichtundurchlässigen Bereich aufweist. Jeweilige Zapfen, an denen die Lamelle gelagert ist, können dabei als Lichtleiter fungieren. Der lichtundurchlässige Bereich der Lamelle kann hier ebenfalls durch eine Galvanikschicht erzeugt werden. Die Galvanikschicht kann dabei zudem als Stromleiter fungieren.
Aus der DE 10 2006 044 813 A1 ist ein beleuchtbares Bauteil mit einem Grundträger bekannt, der mindestens eine Aussparung aufweist. In der Aussparung ist ein beleuchtbarer Einsatz angeordnet. Der beleuchtbare Einsatz weist ein Trägerbauteil auf, auf dem ein Leuchtmittel angeordnet ist. Oberhalb des Leuchtmittels ist eine durchleuchtbare äußere Schicht vorgesehen. Dabei ist es vorgesehen, dass dieses Bauteil wenigstens teilweise beschichtet wird, insbesondere mit einer Galvanikschicht. Nicht vorgesehen ist, dass der Grundträger aus mehr als einem Werkstoff gebildet ist.

Die FR 2 972 402 A1 beschreibt ein gattungsgemäßes zweiteiliges, beleuchtbares Zierteil für ein Kraftfahrzeug.
Aufgabe der vorliegenden Erfindung ist es, ein Zierteil mit einem beleuchtbaren Teil zu schaffen und ein Kraftfahrzeug mit einem Zierteil, bei welchem eine Galvanikschicht besonders einfach herstellbar ist.
Diese Aufgabe wird erfindungsgemäß durch ein Zierteil mit den Merkmalen des Patentanspruchs 1 gelöst. Weiterhin wird diese Aufgabe durch ein Kraftfahrzeug mit den Merkmalen des Patentanspruchs 7 gelöst. Vorteilhafte Ausgestaltungen und Weiterbildungen der Erfindung sind in den übrigen Patentansprüchen angegeben.
Um ein Zierteil für ein Kraftfahrzeug zu schaffen, dessen Galvanikschicht besonders einfach herstellbar ist, ist es erfindungsgemäß vorgesehen, dass die Zierteilfront in einem Bereich, in welchem das erste und das zweite Teil aneinander angrenzen, einen Absatz aufweist. Durch diesen Absatz wird bei der Galvanisierung der Zierteilfront eine Abrisskante gebildet. Damit wird die Galvanikschicht scharf auf die Oberfläche des ersten Teils begrenzt, welche aus dem ersten, galvanisierbaren Werkstoff gebildet ist. Unerwünschte Überlappungen der Galvanikschicht auf die Oberfläche des zweiten, ungalvanisierbaren Teils werden so zuverlässig verhindert. Dadurch entsteht eine besonders scharfe Trennkante zwischen der beleuchtbaren Oberfläche und der Galvanikschicht. Die beleuchtbare Oberfläche weist also eine klar umrissene Begrenzung auf. Außerdem kann das Ende der Galvanikschicht durch den Absatz geschützt werden. Mit dem Absatz wird insbesondere zuverlässig erreicht, dass die Galvanikschicht an ihrem Randbereich besonders genau in Überdeckung mit dem ersten Teil endet. Es ist also keine weitere Nachbearbeitung, beispielsweise mit einem Laser oder mechanisch, nötig. Auch können zusätzlich Fertigungsschritte zur Vorbereitung der Galvanisierung, wie ein Maskieren der nicht zu galvanisierenden Oberflächenbereiche, entfallen.

Der Absatz wird beispielsweise dadurch gebildet, dass der dem zweiten Teil der Oberfläche zugeordnete Teilbereich der Zierteilfront senkrecht zu dem Teilbereich, welcher dem ersten Teil zugeordnet ist, von diesem beabstandet ist. Es kann so beispielsweise ein stufenförmiger Absatz vorgesehen sein. Alternativ kann der Absatz beispielsweise als Kante ausgebildet sein, wobei jeweilige der Zierteilfront zugehörige Seiten des ersten und des zweiten Teils an ihren angrenzenden Flächenbereichen zueinander einen Winkel bilden. Dieser Winkel sorgt dann für eine saubere Abrisskante bei der Galvanikschicht.

Als Zierteilfront ist die Oberfläche vorgesehen, welche einem Innenraum des Kraftfahrzeugs in einer bestimmungsgemäßen Einbaulage des Zierteils zugewandt ist. Ungalvanisierbar kann so verstanden werden, dass der Werkstoff überhaupt nicht galvanisiert werden kann. Ungalvanisierbar kann hier aber auch bedeuten, dass der zweite, ungalvanisierbare Werkstoff nicht mit demselben Galvanikverfahren beschichtbar ist, wie der erste, galvanisierbare Werkstoff. Das heißt, bei Verwendung eines bestimmten Galvanikverfahrens lagert sich die Galvanikschicht lediglich an der Oberfläche des ersten Werkstoffs ab.

Als ungalvanisierbarer Werkstoff, welcher auch als galvanoinertes Material bezeichnet werden kann, wird beispielsweise Polycarbonat, kurz PC, eingesetzt. Polycarbonat ist amorph, medienbeständig, UV-stabil und kratzfest. Außerdem sollte der ungalvanisierbare Werkstoff lichtdurchlässig sein, was bei PC ebenfalls möglich ist. Der erste, galvanisierbare Werkstoff kann beispielsweise Butadincopolymerisat, insbesondere Acrylnitril-Butadien-StyrolCopolymerisat - kurz ABS - oder eine Mischung aus Acrylnitril-Butadien-Styrol-Copolymerisat und Polycarbonat sein - kurz PC/ABS -.

Das erste Teil und das zweite Teil des Zierteils können beispielsweise in einem gemeinsamen Spritzgussverfahren hergestellt werden. Insbesondere das sogenannte Zweikomponenten-Spritzgussverfahren, bei welchem zunächst der erste Werkstoff in ein Spritzgusswerkzeug eingespritzt wird und nach Verlagerung eines verschiebbaren Elements des Spritzgusswerkzeugs in die so entstehenden Freiräume der zweite Werkstoff eingespritzt wird, kann hier vorteilhafterweise eingesetzt werden. Dabei muss der erste Werkstoff wenigstens teilweise aushärten, bevor der zweite Werkstoff eingespritzt werden kann. Ein solches Herstellungsverfahren ist besonders kostengünstig. Als Werkstoffe werden vorzugsweise Kunststoffe eingesetzt, welche besonders kostengünstig und leicht sind.

Die Beleuchtungseinrichtung kann beispielsweise wenigstens eine Leuchtdiode umfassen, welche besonders bauraumgünstig und leicht ist. Außerdem erzeugt eine Leuchtdiode besonders wenig Wärme bei der Lichterzeugung. In weiterer vorteilhafter Ausgestaltung der Erfindung ist es vorgesehen, dass in einer bestimmungsgemäßen Einbaulage des Zierteils in einem Innenraum eines Kraftfahrzeugs das erste Teil weiter in den Innenraum hineinragt als das zweite Teil. Damit kann insbesondere vom Innenraum aus betrachtet eine saubere optische Kante bei der beleuchtbaren Fläche erzeugt werden. Außerdem ist die gegebenenfalls empfindlichere Oberfläche des zweiten Teils durch die besonders weit in den Innenraum hineinragende und robustere Oberfläche der Galvanikschicht geschützt. Insbesondere eine metallische Galvanikschicht ist besonders kratzresistent.

Gemäß der Erfindung ist es vorgesehen, dass der Absatz eine Nut ist, wobei ein Boden der Nut durch das zweite Teil und jeweilige Seitenwände der Nut von dem ersten Teil gebildet sind. Die Nut kann also beispielsweise durch zwei, insbesondere parallele und voneinander beabstandete Absätze zwischen dem ersten und dem zweiten Teil gebildet sein. Das zweite Teil ist, wenn es den Boden der Nut bildet, besonders gut vor Beschädigungen geschützt. Außerdem sind die optischen Konturen der beleuchtbaren Fläche so für einen Betrachter besonders scharf. Dafür kann das erste Teil - genauso wie das zweite Teile - auch aus mehreren, insbesondere nicht miteinander verbundenen Elementen bestehen. Bei einer solchen Ausgestaltung des ersten und/oder zweiten Teils sind besonders komplexe Geometrien sowohl des Zierteils als auch der beleuchtbaren Oberfläche möglich.

Weiterhin vorteilhaft ist es, wenn in einer bestimmungsgemäßen Einbaulage des Zierteils in einem Innenraum eines Kraftfahrzeugs das zweite Teil weiter in den Innenraum hineinragt als das erste Teil. Dadurch ist es möglich, dass das zweite Teil des Zierteils besonders gut ertastbar ist. Insbesondere kann eine reliefartige Oberfläche erzeugt werden.

Besonders vorteilhaft ist es, wenn die Zierteilfront einen Steg aufweist, wobei eine Oberseite des Stegs und jeweilige Seitenwände des Stegs von dem zweiten Teil gebildet sind. Der Steg kann also beispielsweise durch zwei Absätze zwischen dem ersten und dem zweiten Teil gebildet sein. Durch einen solchen Steg kann eine Abstrahlcharakteristik der beleuchtbaren Oberfläche der Zierteilfront erzeugt werden, welche nicht nur im Wesentlichen senkrecht aus der Zierteilfront heraus strahlt, sondern auch Licht von den jeweiligen Seitenwänden des Stegs abstrahlt. Damit ist der beleuchtbare Teil der Oberfläche der Zierteilfront besonders gut aus unterschiedlichen Richtungen zu erkennen.

Besonders vorteilhaft ist es weiterhin, wenn die Zierteilfront wenigstens ein Symbol aufweist. Das Symbol kann beispielsweise durch den Kontrast zwischen dem ersten Teil und dem zweiten Teil der Zierteilfront gebildet sein. Eines der beiden Teile bildet beispielsweise das Symbol im Negativ ab, während das andere der beiden Teile das Symbol positiv darstellt. Dabei kann das Symbol entweder durch den beleuchtbaren Teil der Oberfläche der Zierteilfront dargestellt werden, aber auch durch das zweite Teil und/oder die das zweite Teil wenigstens teilweise bedeckende, lichtundurchlässige Galvanikschicht. Das Symbol kann beispielsweise ein Markenzeichen sein, ein Piktogramm, ein Schriftzug, eine geometrische Form und/oder eine Zahl. Damit kann die Zierteilfront sowohl als besonders dekoratives Element, als auch als Informationselement dienen. Insbesondere können mit der Zierteilfront so Informationen dargestellt werden, welche für einen Insassen des Kraftfahrzeugs auch bei Dunkelheit leicht zu identifizieren sind.

In weiterer vorteilhafter Ausgestaltung der Erfindung ist es vorgesehen, dass das zweite Teil einen Lichtleiter zu einer Beleuchtungseinrichtung bildet, mittels welcher die der Zierteilfront zugehörige Oberfläche des zweiten Teils beleuchtbar ist. Das zweite Teil des Zierteils kann beispielsweise als Lichtleiter dienen, wenn seine Seiten in besonderer Art und Weise angeschliffen oder angefräst sind, sodass Licht an der so behandelten Oberfläche zurück reflektiert wird. Das so ausgebildete Zierteil ist besonders kostengünstig und bauraumsparend, da kein zusätzlicher Lichtleiter zu der Beleuchtungseinrichtung vorgesehen werden muss.

Alternativ oder zusätzlich kann das Zierteil einen Lichtleiter zu einer Beleuchtungseinrichtung umfassen, mittels welcher die der Zierteilfront zugehörige Oberfläche des zweiten Teils beleuchtbar ist. Ein solch separater Lichtleiter ermöglicht eine besonders freie Anordnung der Beleuchtungseinrichtung in dem Kraftfahrzeug, da so eine Lichtquelle problemlos vom Zierteil beabstandet positionierbar ist.

Weiterhin vorteilhaft ist es, wenn das Zierteil wenigstens ein Reflexionselement umfasst, welches so an dem Zierteil angeordnet ist, dass mittels des Reflexionselements aus dem Lichtleiter austretendes Licht in Richtung der der Zierteilfront zugehörigen Oberfläche des zweiten Teils reflektierbar ist. Dafür befindet sich das Reflexionselement beispielsweise wenigstens in teilweiser Überdeckung mit der der Zierteilfront zugehörigen Oberfläche des zweiten Teils hinter dem zweiten Teil und/oder hinter dem separaten Lichtleiter. Das Reflexionselement kann beispielsweise als reflektierende Folie oder reflektierendes Gehäuseelement ausgebildet sein. Mittels des Reflexionselements ist der beleuchtbare Teil der Oberfläche der Zierteilfront besonders effizient beleuchtbar. Es geht kein oder besonders wenig Licht durch eine Abstrahlung in beispielsweise eine Verkleidung des Kraftfahrzeugs verloren. Das Reflexionselement kann das aus dem Lichtleiter austretende Licht auf die zu beleuchtende Oberfläche bündeln. Alternativ kann das zweite Teil mit dem Reflexionselement zusammen den Lichtleiter bilden.

Weiterhin betrifft die Erfindung ein Kraftfahrzeug mit dem erfindungsgemäßen Zierteil oder einer mit einer vorteilhaften Ausführungsform des erfindungsgemäßen Zierteils.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in den jeweils angegebenen Kombinationen, sondern auch in anderen Kombinationen oder in Alleinstellung verwendbar, ohne den Rahmen der Erfindung zu verlassen.

Dabei zeigt:
- Fig. 1: in einer schematischen Perspektivansicht eine Fahrzeugtür mit einem daran befestigten Zierteil;
- Fig. 2: in einer schematischen Perspektivansicht das Zierteil gemäß Fig. 1 und eine dazugehörige Beleuchtungseinrichtung;
- Fig. 3: in einer schematischen Schnittansicht das in Fig. 1 gezeigte Zierteil; und
- Fig. 4: in einer weiteren, anders orientierten schematischen Schnittansicht ebenfalls das Zierteil gemäß Fig. 1.

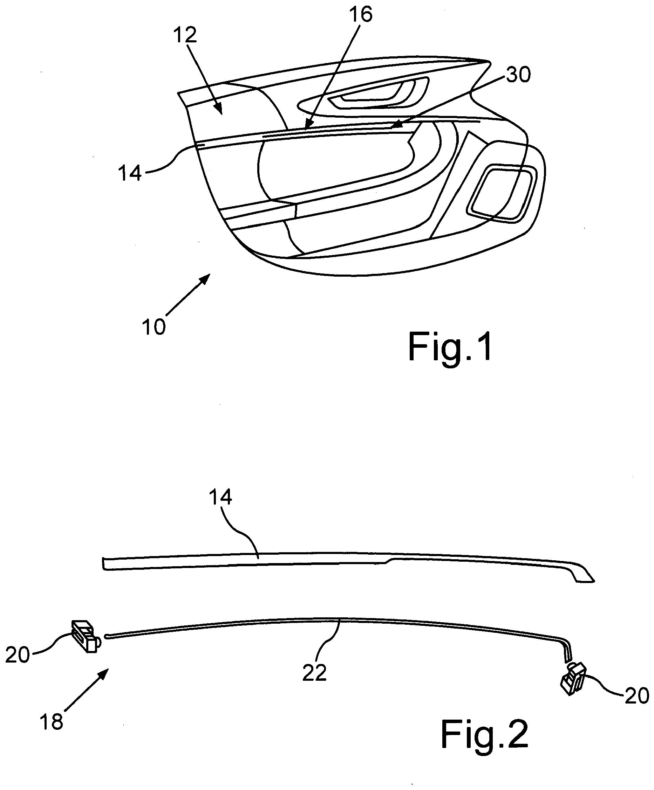

Fig. 1 zeigt in einer schematischen Perspektivansicht eine Fahrzeugtür 10 eines Kraftfahrzeugs, welche aus Sicht eines Innenraums des Kraftfahrzeugs dargestellt ist. Innerhalb einer Verkleidung 12 dieser Fahrzeugtür 10 ist ein Zierteil 14 eingelassen. Das Zierteil 14 ist dabei als Zierleiste ausgebildet, welche auf ihrer Zierteilfront 16 wenigstens einen beleuchtbaren Teilbereich aufweist. Das Zierteil 14 kann dabei zur ästhetischen Innenraumgestaltung des Kraftfahrzeugs genutzt werden. Es können aber auch jeweilige Symbole, Kennzeichnungen, Warnhinweise oder dergleichen darauf insbesondere beleuchtet dargestellt werden, wodurch das Zierteil 14 so beispielsweise auch als Hinweistafel dienen kann.

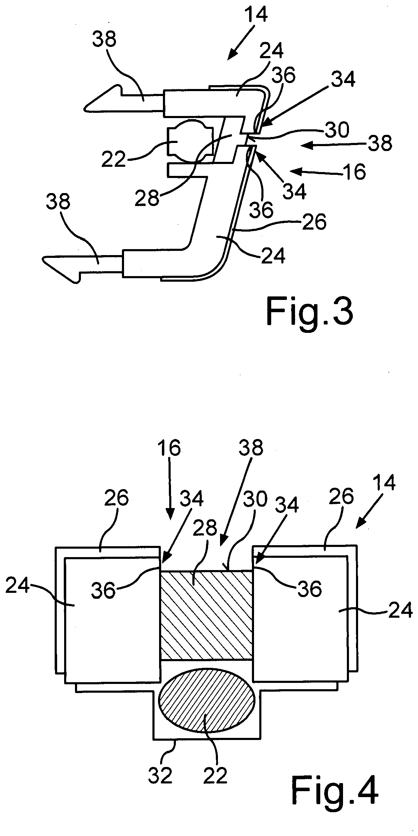

Das Zierteil 14 kann als Konturlicht mit verchromten Teilen ausgebildet sein. Es weist eine Bauteillänge von mehr als 50 Millimeter auf. Der Lichtaustritt aus dem Zierteil 14 ist lediglich partiell. Das Zierteil 14 weist beispielsweise zwei seiner Zierteilfront 16 abgewandte Rasthacken 40 - dargestellt in Fig. 3 - auf, mittels welchen das Zierteil 14 an der Fahrzeugtür 10 befestigbar ist. Bei der in Fig. 1 dargestellten Lage des Zierteils 14 handelt es sich um eine bestimmungsgemäße Einbaulage des Zierteils 14 in einem Innenraum eines Kraftfahrzeugs.

In der schematischen Ansicht von Fig. 2 ist das Zierteil 14 gemeinsam mit einer Beleuchtungseinrichtung 18 gezeigt. Diese Beleuchtungseinrichtung 18 kann beispielsweise hinter dem Zierteil 14 und/oder der Verkleidung 12 der Fahrzeugtür 10 angeordnet sein und dient zur Beleuchtung der beleuchtbaren Flächen des Zierteils 14. Zu diesem Zweck umfasst die Beleuchtungseinrichtung 18 zwei Lichtquellen 20, welche als RGB-Leuchtdiodenmodule ausgebildet sind. Diese Lichtquellen 20 sind mit einem gemeinsamen Lichtleiter 22 verbunden, welcher das mittels der Lichtquellen 20 erzeugte Licht zu den jeweiligen zu beleuchtenden Bereichen des Zierteils 14 leitet. Der Lichtleiter 22 besteht beispielsweise aus Polymethylmethacrylat, kurz PMMA.

Anhand der schematischen Schnittansichten des Zierteils 14 von Fig. 3 und Fig. 4 ist dessen beispielhafter Aufbau detaillierter dargestellt. Fig. 4 zeigt dabei das Zierteil 14 in vereinfachter Form und mit einer anderen Orientierung als Fig. 3. Das Zierteil 14 umfasst ein erstes Teil 24, welches aus einem ersten, galvanisierbaren Werkstoff gebildet ist. Das erste Teil 24 ist von einer Galvanikschicht 26 an seiner Oberfläche wenigstens teilweise bedeckt. Die Galvanikschicht 26 kann beispielsweise als Chromschicht ausgebildet sein. Weiterhin umfasst das Zierteil 14 einen zweiten, an das erste Teil 24 angrenzenden zweiten Teil 28, welches aus einem zweiten, ungalvanisierbaren und lichtdurchlässigen Werkstoff gebildet ist. Dadurch, dass der zweite Werkstoff lichtdurchlässig ist, ist eine der Zierteilfront 16 des Zierteils 14 zugehörige Oberfläche 30 des zweiten Teils 28 rückseitig beleuchtbar. Der erste, galvanisierbare Werkstoff ist beispielsweise ein Kunststoff wie ABS oder PC/ABS. Der zweite, ungalvanisierbare Werkstoff ist beispielsweise ein Kunststoff wie PC.

In einer alternativen nicht dargestellten Ausführungsform des Zierteils 14 kann das zweite Teil 28 als Lichtleiter ausgebildet sein. Dann ist das Zierteil 14 besonders bauraumsparend. Außerdem kann auf den separaten Lichtleiter 22 verzichtet werden.

Vorzugsweise kann das Zierteil 14 mit einem Zweikomponentenverfahren gefertigt werden. Das heißt, sowohl das erste Teil 24 als auch das zweite Teil 28 können in einem gemeinsamen Fertigungsschritt beispielsweise aus Kunststoff gegossen werden. Dabei wird vorteilhafterweise nur ein Spritzgusswerkzeug benötigt. Anschließend kann das Zierteil 14 in ein Galvanikbad getaucht werden, wobei sich lediglich die Galvanikschicht 26 an der freien Oberfläche des ersten Teils 24 ablagert. An dem zweiten Teil 28, welcher aus dem ungalvanisierbaren Werkstoff gebildet ist, lagert sich die Galvanikschicht 26 dagegen nicht ab.

Wenigstens rückseitig des zweiten Teils 28, insbesondere rückseitig des Lichtleiters 22, ist ein Reflexionselement 32 in wenigstens teilweiser Überdeckung mit der beleuchtbaren Oberfläche 30 angeordnet. Rückseitig heißt hier auf der der zu beleuchtenden Oberfläche 30 abgewandten Seite. Dieses Reflexionselement 32 reflektiert Licht in Richtung der beleuchtbaren Oberfläche 30. Dadurch ist diese Oberfläche 30 besonders hell beleuchtbar.

Problematisch kann bei der Fertigung des Zierteils 14 sein, dass gegebenenfalls Teile der Galvanikschicht 26 die zu beleuchtende Oberfläche 30 des zweiten Teils 28 überlappen. Diese Überlappung kann beispielsweise entstehen, wenn die Galvanikschicht 26 das zweite Teil 28 bedeckt, ohne jedoch mit diesem eine Verbindung einzugehen. Dadurch kommt es zu einer Erzeugung von unpräzisen, beleuchtbaren Konturen. Außerdem kann es sein, dass sich bei einem nachträglichen Lösen dieser Überlappung der Galvanikschicht 26 auch Teilbereiche der Galvanikschicht 26 gelöst werden, welche die Oberfläche des ersten Teils 24 bedecken. Dies kann zu sichtbaren Fehlern der Galvanikschicht 26 führen und damit zu einer verminderten Qualitätsanmutung. Generell können Bereiche der Galvanikschicht 26, welche das erste Teil 24 bedecken, besonders einfach beschädigt werden, da die Galvanikschicht 26 keine feste Verbindung mit dem zweiten Teil 28 eingehen kann.

Um diese Nachteile zu vermeiden, ist es vorgesehen, dass die Zierteilfront 16 in einem Bereich 34, in welchem das erste und das zweite Teil 24 und 28 aneinander angrenzen, einen Absatz 36 aufweist. Mittels dieses Absatzes 36 wird eine klare Abrisskante für die Galvanikschicht 26 während der Galvanisierung des Zierteils 14 vorgegeben. Dadurch können sehr präzise Richtlinien bei einer einteiligen Blende erzeugt werden. Es ist also beispielsweise nicht notwendig, das Zierteil 14 vor der Galvanisierung zu maskieren, um so eine Galvanisierung im Bereich der Oberfläche 30 und/oder in Überdeckung mit dem Teil 28 sicher zu vermeiden. Auch ist keine zusätzliche Entfernung von überflüssigen Teilbereichen der Galvanikschicht 26 beispielsweise mittels eines Lasers oder mechanisch notwendig. Das Zierteil 14 ist also so direkt ohne weitere Fertigungsschritte galvanisierbar. Trotzdem weist das Zierteil 14 eine besonders präzise gestaltbare und beleuchtbare Oberfläche 30 auf. Das Zierteil 14 hat also so eine besonders hohe Qualitätsanmutung und ist zudem besonders kostengünstig herstellbar.
Wie in Fig. 3 und Fig. 4 ebenfalls zu erkennen ist, weist die Zierteilfront 16 durch die Gestaltung des ersten Teils 24 und des zweiten Teils 28 eine Nut 38 auf, wobei ein Boden der Nut 38 durch das zweite Teil 28 und jeweilige Seitenwände der Nut 38 von dem ersten Teil 24 gebildet sind. Dadurch ist die beleuchtbare Oberfläche 30 des zweiten Teils 28 besonders gut vor Beschädigungen geschützt, da sie in der Zierteilfront 16 eingelassen ist. Außerdem wird somit der Eindruck von scharfen Linien der beleuchtbaren Oberfläche 30 nochmals verstärkt. Eine Abstrahlung von Licht in seitliche Richtung wird durch die Nut 38 besonders reduziert.

## Patentansprüche

1. Zierteil (14) für ein Kraftfahrzeug mit einem ersten Teil (24), welches aus einem ersten, galvanisierbaren Werkstoff gebildet ist, und einer Galvanikschicht (26), welche eine Oberfläche des ersten Teils (24) wenigstens teilweise bedeckt, und einem zweiten, an das erste Teil (24) angrenzenden Teil (28), welches aus einem zweiten, ungalvanisierbaren und lichtdurchlässigen Werkstoff gebildet ist, wobei eine einer Zierteilfront (16) des Zierteils (14) zugehörige Oberfläche (30) des zweiten Teils (28) rückseitig beleuchtbar ist,
wobei die Zierteilfront (16) in einem Bereich (34), in welchem das erste (24) und das zweite Teil (28) aneinander angrenzen, einen Absatz (36) aufweist,
**dadurch gekennzeichnet, dass** der Absatz (36) eine Nut (38) ist, wobei ein Boden der Nut (38) durch das zweite Teil (28) und jeweilige Seitenwände der Nut (38) von dem ersten Teil (24) gebildet sind.

2. Zierteil (14) nach Anspruch 1,
**dadurch gekennzeichnet, dass**
in einer bestimmungsgemäßen Einbaulage des Zierteils (14) in einem Innenraum eines Kraftfahrzeugs das erste Teil (24) weiter in den Innenraum hineinragt als das zweite Teil (28).

3. Zierteil (14) nach einem der vorhergehenden Ansprüche,
**dadurch gekennzeichnet, dass**
die Zierteilfront (16) wenigstens ein Symbol aufweist.

4. Zierteil (14) nach einem der vorhergehenden Ansprüche,
**dadurch gekennzeichnet, dass**
der zweite Teil (28) einen Lichtleiter zu einer Beleuchtungseinrichtung (18) bildet, mittels welcher die der Zierteilfront (16) zugehörige Oberfläche (30) des zweiten Teils (28) beleuchtbar ist.

5. Zierteil (14) nach einem der Ansprüche 1 bis 3,
**dadurch gekennzeichnet, dass**
das Zierteil (14) einen Lichtleiter (22) zu einer Beleuchtungseinrichtung (18) umfasst, mittels welcher die der Zierteilfront (16) zugehörige Oberfläche (30) des zweiten Teils (28) beleuchtbar ist.

6. Zierteil (14) nach einem der Ansprüche 4 oder 5,
**dadurch gekennzeichnet, dass**
das Zierteil (14) wenigstens ein Reflexionselement (32) umfasst, welches so an dem Zierteil (14) angeordnet ist, dass mittels des Reflexionselements (32) aus dem Lichtleiter (22) austretendes Licht in Richtung die der Zierteilfront (16) zugehörigen Oberfläche (30) des zweiten Teils (28) reflektierbar ist.

7. Kraftfahrzeug mit einem Zierteil (14) nach einem der vorhergehenden Ansprüche.

## Claims

1. Decorative trim (14) for a motor vehicle including a first part (24) formed of a first material which can be electroplated and an electroplating layer (26), which at least partially covers a surface of the first part (24), and a second part (28) adjacent to the first part (24), which is formed of a second material that cannot be galvanized and is light-permeable, wherein a surface (30) associated with a decorative trim front (16) of the decorative trim (14) of the second part (28) can be illuminated on the back,
wherein the decorative trim front (16) has a shoulder (36) in a region (34), in which the first (24) and the second part (28) are adjacent to each other,
**characterised in that**,
the shoulder (36) is a groove (38), wherein a floor of the groove (38) is formed by the second part (28) and the respective side walls of the groove (38) by the first part (24).

2. Decorative trim (14) according to claim 1,
**characterised in that**,
in an intended installation position of the decorative trim (14) in a compartment of a motor vehicle, the first part (24) extends further into the compartment than the second part (28).

3. Decorative trim (14) according to any of the preceding claims,
**characterised in that**
the decorative trim front (16) presents at least one symbol.

4. Decorative trim (14) according to any of the preceding claims,
**characterised in that**,
the second part (28) forms a light conductor to an illumination apparatus (18), by means of which the surface (30) belonging to the decorative trim front (16) of the second part (28) can be illuminated.

5. Decorative trim (14) according to any one of claims 1 to 3,
**characterised in that**,
the decorative trim (14) comprises a light conductor (22) for an illumination apparatus (18), by means of which the surface (30) belonging to the decorative trim front (16) of the second part (28) can be illuminated.

6. Decorative trim (14) according to any one of claims 4 or 5,
**characterised in that**,
the decorative trim (14) comprises at least one reflective element (32), which is arranged on the decorative trim (14) in such a way that, by means of the reflective element (32), light emerging from the illuminator (22) can be reflected in the direction of the surface (30) belonging to the decorative trim front (16) of the second part (28).

7. Motor vehicle with a decorative trim (14) according to any of the preceding claims.

## Revendications

1. Élément décoratif (14) pour un véhicule automobile avec une première partie (24) qui est formée en un premier matériau galvanisable et avec une couche galvanique (26) qui recouvre au moins partiellement une surface de la première partie (24) et avec une deuxième partie (28) qui est adjacente à la première partie (24) et qui est formée en un deuxième matériau non galvanisable et transparent, dans lequel une surface (30), associée à une façade d'élément décoratif (16) de l'élément décoratif (14), de la deuxième partie (28) peut être éclairée par l'arrière,
dans lequel la façade d'élément décoratif (16) comporte un décrochement (36) dans une zone (34) dans laquelle la première partie (24) et la deuxième partie (28) sont adjacentes l'une à l'autre,
**caractérisé en ce que**
le décrochement (36) est une rainure (38), un fond de la rainure (38) étant formé par la deuxième partie (28) et des parois latérales respectives de la rainure (38) étant formées par la première partie (24).

2. Élément décoratif (14) selon la revendication 1,
**caractérisé en ce que**,
dans une position de montage conforme de l'élément décoratif (14) dans un habitacle d'un véhicule automobile, la première partie (24) dépasse plus dans l'habitacle que la deuxième partie (28).

3. Élément décoratif (14) selon l'une quelconque des revendications précédentes,
**caractérisé en ce que**
la façade d'élément décoratif (16) comporte au moins un symbole.

4. Élément décoratif (14) selon l'une quelconque des revendications précédentes,
**caractérisé en ce que**
la deuxième partie (28) forme un guide de lumière vers un dispositif d'éclairage (18) au moyen duquel la surface (30), associée à la façade d'élément décoratif (16), de la deuxième partie (28) peut être éclairée.

5. Élément décoratif (14) selon l'une quelconque des revendications 1 à 3,
**caractérisé en ce que**
l'élément décoratif (14) comprend un guide de lumière (22) vers un dispositif d'éclairage (18) au moyen duquel la surface (30), associée à la façade d'élément décoratif (16), de la deuxième partie (28) peut être éclairée.

6. Élément décoratif (14) selon l'une quelconque des revendications 4 ou 5,
**caractérisé en ce que**
l'élément décoratif (14) comprend au moins un élément réfléchissant (32) qui est agencé de telle manière au niveau de l'élément décoratif (14) que, au moyen de l'élément réfléchissant (32), de la lumière sortant du guide de lumière (22) peut être réfléchie en direction de la surface (30), associée à la façade d'élément décoratif (16), de la deuxième partie (28).

7. Véhicule automobile avec un élément décoratif (14) selon l'une quelconque des revendications précédentes.
